Europäisches Patentamt

European Patent Office

Office européen des brevets

(19)

(11) **EP 0 520 128 B1**

(12)

# EUROPEAN PATENT SPECIFICATION

(45) Date of publication and mention
of the grant of the patent:
**27.03.1996 Bulletin 1996/13**

(51) Int Cl.6: **G05B 19/423**

(21) Application number: **92100608.6**

(22) Date of filing: **15.01.1992**

(54) **System for programming electric robots by direct learning**

Vorrichtung zur Programmierung elektrischer Roboter durch direktes Lernen

Système de programmation de robots électriques par apprentissage direct

(84) Designated Contracting States:
**DE ES FR GB SE**

(30) Priority: **25.06.1991 IT MI911745**

(43) Date of publication of application:
**30.12.1992 Bulletin 1992/53**

(73) Proprietor: **G.E.R. GAIOTTO ELETTRONICA
ROBOTS S.r.l.
I-67051 Avezzano (Aquila) (IT)**

(72) Inventors:
- **Gaiotto, Cesare
  I-26010 Vaiano Cremasco (Cremona) (IT)**
- **Gaiotto, Alvise
  I-26010 Monte Cremasco (Cremona) (IT)**

(74) Representative: **Liesegang, Roland, Dr.-Ing.
FORRESTER & BOEHMERT
Franz-Joseph-Strasse 38
D-80801 München (DE)**

(56) References cited:
**EP-A- 0 077 906     EP-A- 0 391 216
EP-A- 0 442 772     US-A- 4 255 643
US-A- 4 638 234**

## Description

The present invention generally relates to electric robots and, more particularly, a device permitting said robots to be programmed by direct learning.

As known, the robots employed till now were generally of hydraulic type, i.e. robots the axes of which are directly controlled by hydraulic motors. In these robots it is compulsory to provide an hydraulic central control unit for the operation thereof. In the hydraulic robots the movements of the robot movable parts can be programmed in two manners, namely according to the method of automatic learning point-to-point, or through a manipulator, so called "joy-stick", or according to the method of direct learning, i.e. by hand. By employing the latter method the robot axes are moved by the operator hands according to a predetermined program. In both cases the movement values of the robot axes are converted, through a position transducer so called "resolver", in electric signals which are recorded in a center computer. Once this programming operation has been performed the robot can be operated according to the so recorded program, always through said resolver so that it can perform the same sequence of movements as that memorized. The resolver is normally directly mounted on the shaft of the hydraulic motor so that it directly converts the angular position and the number of revolutions of the hydraulic motor in a digital signal.

An application field in which this method of direct learning is employed is for example the field of spray painting of articles in which the spray gun applied on the wrist of the robot is gripped by the operator hand and moved together with the robot wrist, according to the desired painting pattern recorded in the memory of the computer in the above described manner.

At present, the use of electrically operating robots is spreadely become established because these robots do not require a hydraulic control center unit and are faster. In the electric robots the robot axes are each connected to an electric motor through a reduction gear. The resolver which is intended to program and control the robot is mounted on the shaft of the electric motor.

If the programming operation by direct learning can be performed without difficulty with the hydraulic robots, because it is sufficient to drain the hydraulic medium from the hydraulic circuit in order to easily move the robot axes, in the electric robots this programming operation by direct learning cannot be performed because the electric motor is always connected to the robot axis by the intermediate of its reduction gear and therefore the transmission system is so to say rigid so that the robot axes cannot be any longer moved by the hands of the operator because of the resistance given by the masses constrained to each other.

The document EP-A-0 391 216 discloses a direct teaching type robot having a moving arm driven by an electric motor, a clutch disposed between the moving arm of the robot and a servo-motor. When the servo-motor is used to operate the moving arm of the robot the clutch is coupled between the moving arm of the robot and the servo-motor while when the teaching operation is made to the robot the clutch is disconnected. The great disadvantage of this arrangement resides in that, since the servo-motor is connected to the moving arm of the robot through a reduction gear and the clutch is arranged between the reduction gear and the servo-motor, when the clutch is disconnected the reduction gear is still connected to the moving arm of the robot and the operator in the teaching operation, in addition to the moving arm, must move also the reduction gear.

The document US-A-4,638,234 discloses an industrial robot having a first resolver for determining the angular position of an arm of an articulated joint of the robot and a second resolver coaxially arranged with respect to the first resolver in order to be able to check the true position of the arm of the joint. This arrangement is intended to control the position of two arms of robot.

The present invention aims at providing a system capable to reduce at a minimum the resistance of the reduction gear-electric motor unit during the programming operation by direct or manual learning of the electric robots without reducing their precision with respect to the hydraulic robots.

According to the present invention the system for programming by direct or manual learning an electric robot having each of its axes controlled by an electric motor, a reduction gear connected to each electric motor and to each robot axis, a clutch for disconnecting the electric motor during the programming operation by direct or manual learning and connecting again the electric motor during the operation of the robot, a resolver on each shaft of the electric motors and a control means for engaging and disengaging each clutch is characterized in that said clutch is arranged between the robot axis and the reduction gear, for disconnecting the latter together with the electric motor from the respective robot axis and in that there is provided a second resolver mounted on each robot axis and undertaking the function of the first resolver mounted on the shaft of each electric motor when the electric motor is disconnected from the robot axis and the programming operation by direct learning is being made.

The present invention will be now described in more detail in connection with a preferred embodiment thereof, given by way of example only and therefore not intended in a limiting sense, illustrated in the accompanying drawings, wherein:

Fig. 1 is a diagrammatic view of a robot for spray painting articles, equipped with the programming system by direct or manual learning according to the present invention;

Fig. 2 is a view of the robot of Fig. 1, in which the robot is roby 90°;

Fig. 3 is a diagrammatic view of the electric robot programming system according to the present invention;

Fig. 4 is a side view of a coupling means mounted between a robot axis and the respective electric motor with the transmission between electric motor and robot axis in connected condition;

Fig. 5 is a view similar to Fig. 4, but with the transmission between electric motor and robot axis in the disconnected condition;

Fig. 6 is a side view of the electric robot programming system according to the present invention as mounted on one robot axis; and

Fig. 7 is a top plan view of the electric robot programming system of Fig. 6.

As already said, the electric robot programming system according to the present invention permits the programming operation by direct or manual learning of an electric robot to be performed. The electric robot is provided for each of its axes with an electric motor and a resolver, the task of which is to read the positions taken over by the robot axis controlled by said electric motor and to convert the read values in digital signals to be memorized in the center computer. For controlling the movements of the robot axes in a fast and exact manner it is necessary that the resolution of the single axes is very high, i.e. it is necessary to divide the rotation angle of the robot axis in a plurality of portions in order to be able to read movements of 5 seconds of degree. For obtaining this resolution, the resolver is mounted on the shaft of the electric motor because the reduction gear between the electric motor and robots axis permits the precision of the resolver to be multiplied by the reduction ratio of the reduction gear.

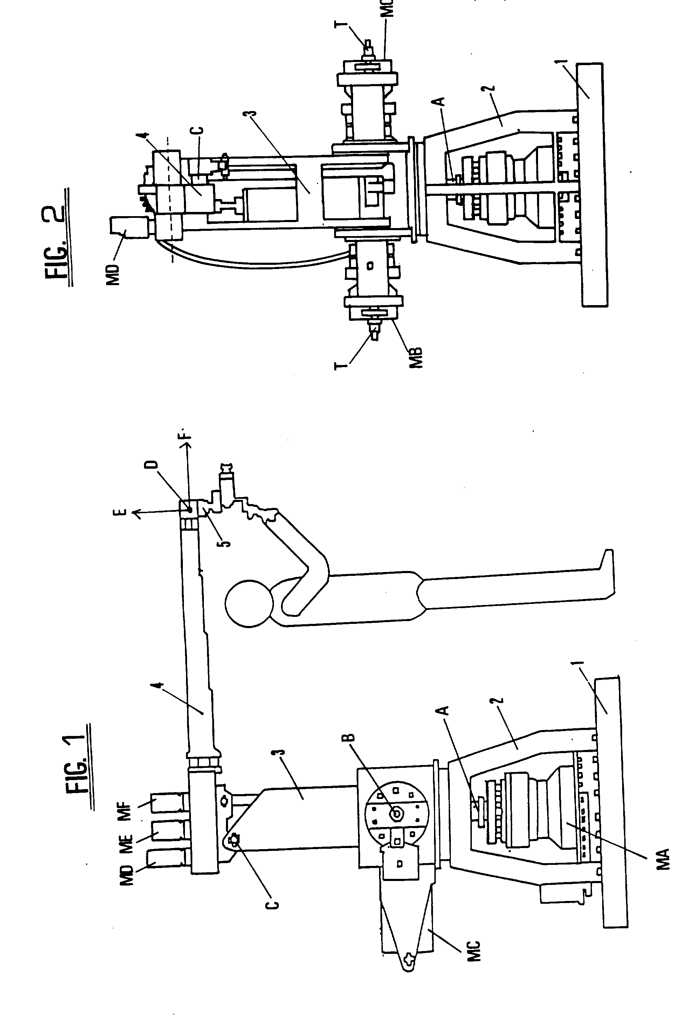

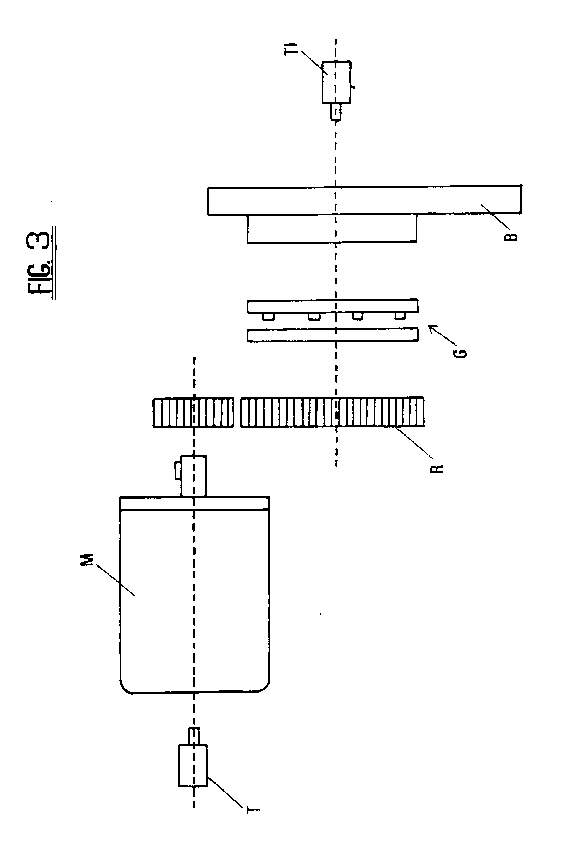

Referring to Figures 1 and 2, there is diagrammatically shown an electric robot used for spray painting articles and having the possibility to be programmed by direct learning in addition to be programmed by automatic learning. This electric robot comprises a base 1 carrying a support stand 2 on which the robot body 3 is mounted so as to rotate about a vertical axis A and a horizontal axis B. On the robot body 3 the robot arm 4 is mounted, which can rotate about the horizontal axis C. At the free end of the robot arm 4 a robot wrist 5 is provided which can rotate about three free axes D,E and F which are perpendicular to each other.

Therefore, the robot body 3, by rotating about the vertical axis A, can span an angle of 180°, whereas the robot arm 4 can swing about the horizontal axis C by a wider angle and the robot wrist 5 can swing by 300° both about the axis D and about the axis F. The rotation of the robot body 3 about the axis A is controlled by an electric motor MA, the rotation of the robot body 3 about the horizontal axis B is controlled by an electric motor MB, the rotation of the robot arm 4 about the axis C is controlled by an electric motor MC. The electric motors MD,ME and MF control the rotation movements of the robot wrist 5 about the axes D,E,F, respectively. As already said, all the electric motors are connected to the respective robot axes through reduction gears R. The resolver T is mounted on the shaft of each electric motor for the above-mentioned reasons, i.e. for obtaining a very high resolution of the movements of the single robot axes.

With a so conceived robot, which operates by means of electric motors rather than hydraulic motors, the electric motors are always connected to the respective robot axes through the reduction gears R. If the programming operation by direct learning is to be made, in which the operator has to move the axes of the robot wrist 5, the robot arm 4 and the robot body 3 by means of suitable handles in order to cause the robot to perform the necessary movements for the painting operation by means of a spray gun applied on the robot wrist 5, the operator should overcome a very high resistance, so that he would not be in a position to make the direct programming operation because the transmission systems formed by the electric motors M and the respective reductions gears R in connected condition would result so to say rigid.

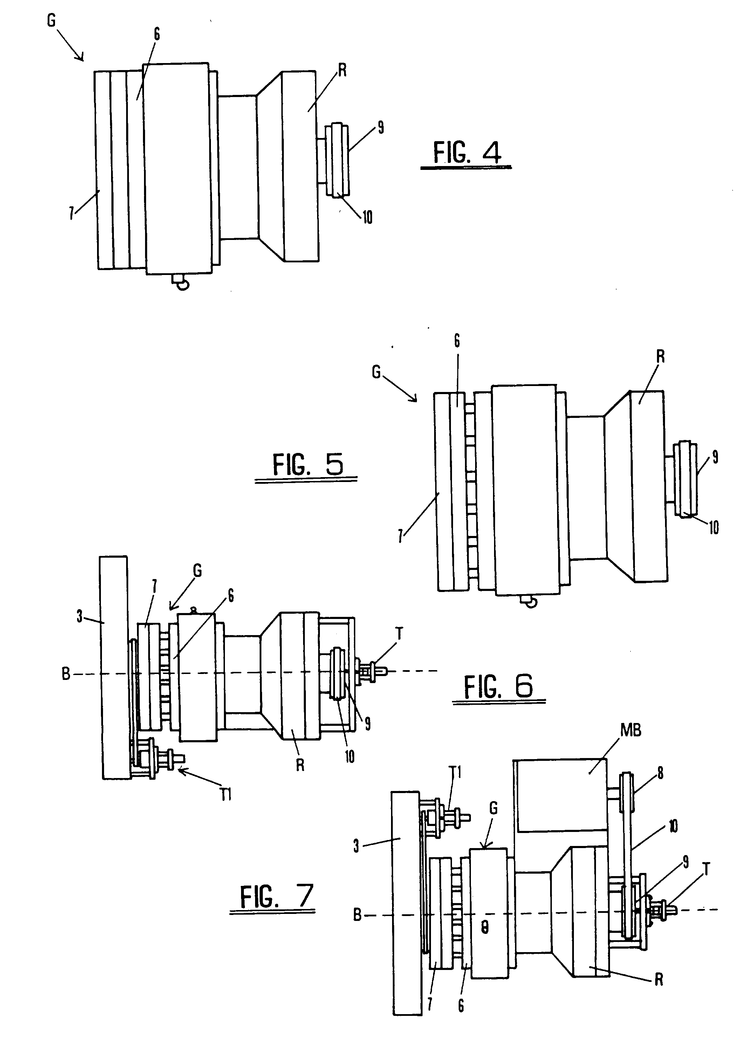

The present invention aims at obviating this serious disadvantage. To attain this result the invention makes use of the system which is diagrammatically shown in Figure 3, in which T indicates the conventional resolver connected to the shaft of the motor M, R indicates the reduction gear connected to the motor M, G indicates the coupling means arranged between the reduction gear R and the robot axis B and T1 indicates a second resolver. This system will be described in more detail in connection with the Figures 4 to 7.

This system is the same for all the electric motors controlling the rotation movements of the robot axes, however in the praxis this system is mounted only on the electric motors MA,MB and MC which are those having the most rigid transmission, because the electric motors MD,ME and MF controlling the rotation movements of the robot wrist 5 are low rated motors, the transmissions of which have a very low rigidity which can be easily overcome by the operator force.

As can be seen from Figure 3, the electric robot programming system according to the present invention is based on the principle of separating at least the shafts of the electric motors MA,MB and MC from the respective robot axes A,B,C and D and inserting a clutch G between the electric motors MA,MB and MC and the respective robot axes A,B and C. Furthermore, because the electric motors are disconnected when the clutch G is disengaged, the electric robot programming system according to the present invention makes use of the second resolver mounted on the robot axis, which undertakes the function of the first resolver mounted on the motor shaft during the programming operation by direct learning.

Figures 4 and 5 show the clutch G mounted on the transmission controlled by the electric motor. For sake of semplicity of the description only the electric motor MB controlling the rotation of the axis B of the robot body 3 will be described, because the same system according to the invention is mounted on each robot axis. This electric motor MB rotates the reduction gear R which rotates the clutch portion 6 fastened thereto. The other clutch portion 7 is fastened to the robot axis B. When the clutch G is engaged, as can be seen from Figure 4, the clutch portion 6 is in engagement with the clutch portion 7 so that the shaft of the electric motor MB is coupled to the respective robot axis B, whereas when the clutch G is disengaged, as can be seen from Figur 5, the clutch portion 7 is disengaged from the clutch portion 7 so that the shaft of the electric motor MB is disconnected from the robot axis B and therefore the robot can be moved about this axis B without the presence of the transmission formed by the electric motor and the reduction gear R. In order to control the engagement and the disengagement of the clutch G, compressed air is preferably used, which is taken from the pressure conduit which feeds the spray gun.

From the foregoing it can be seen that when the clutch G is disengaged, the robot is ready for the programming operation by direct or manual learning because the operator can now move the robot axes A,B and C by gripping the suitable handle provided on the robot wrist 5 without encountering the resistance given by a rigid transmission.

Figures 6 and 7 show the whole electric robot programming system according to the present invention as mounted on one robot axis. Here again, for sake of semplicity of the description, only the robot axis B is considered. In the above Figures the electric motor MB is connected to the robot axis B through the transmission formed by the pulley 8 applied on the driving shaft of the motor, the driving belt 10 and the pulley 9 applied to the reduction gear R. The pulley 9 drives the reduction gear R, which, through the clutch G, rotates the robot axis B. On the robot axis B a second resolver T1 is mounted which, when the clutch G is disengaged, undertakes the function of the resolver T mounted on the shaft of the electric motor as far as the programming operation is concerned. As a matter of fact, by disconnecting the robot axis B from its driving motor MB, when the programming operation by direct learning is performed, only the robot axis B is moved so that the resolver T is inactive. The rotation movements of the axis B are read by the resolver T1 which reads the rotation angle of the axis B, by converting it in a digital electric signal which is recorded in the center computer controlling the robot.

Therefore, the resolver T1 directly mounted on the robot axis during the programming operation by direct or manual learning undertakes the function of the resolver T and therefore it becomes the main resolver, while the resolver T becomes the slave resolver. However, under these circumstances, the resolver T1 cannot read movements with the same precision as in the case of the single resolver mounted on the motor shaft of the conventional hydraulic robots. In fact, the values read by the resolver T1 do correspond to the movements of the robot axis and not to the movements of the motor shaft which where transmitted to the robot axis by taking into account the transmission ratio of the reduction gear R. Since during the operation of the robot the program memorized by direct or manual learning through the resolver T1 mounted on the robot axis is to be read by the resolver T mounted on the motor shaft, it is necessary to modify the programming data by taking into account this necessity. Therefore, during the learning step the various positions taken by each robot axis are mathematically computed by means of the following algorithm:

$$Q = 16384 \times pm / (16384/r)$$

where Q     is the measure of the learning robot
16384     is the point number on 360° supplied by the resolver and is the maximum obtainable resolution;
pm     is the position of the robot axis read by the resolver T1;
r     is the reduction ratio of the resolver T1 to the resolver T.

The memorized program modified by this relation is used now for controlling all the movements of the robot in the sequence provided by the program and with the desired precision during the spraying operation of the articles, in which the resolver T mounted on the motor shaft of the robot axis is employed for operating the robot. As a matter of fact, if during the programming operation by direct or manual learning the positions transmitted by the resolver T1 mounted on the robot axis modified by means of the above mentioned relation are memorized, the resolver T mounted on the motor shaft can perform the so memorized program with the same precision as that in the programming operation performed by the only resolver T mounted on the motor shaft.

Of course, although the electric robot programming system according to the present invention has been described as applied only to the robot axes A,B and C, which are the axes the transmission of which gives the greater resistance to the movement, it is obvious that the electric robot programming system according to the present invention could be mounted also on the other robot axes.

From the foregoing it can be readly apparent that the electric robot programming system according to the present invention permits the above mentioned serious disadvantage of the electric robots, i.e. the impossibility of performing the programming by direct learning of the movements of the robot axes, which in the hydraulic robots occurred without difficulty, to be obviated in a symple and efficent manner.

Furthermore, the special algorithm computed causes the second resolver which directly reads the movements of the robot axes and therefore with a precision which does not take into account the transmission ratio of the reduction gear connected to the motor shaft on which the first resolver is mounted, to supply to the computer the same programming data that the first resolver would have supplied to the computer. As a matter of fact, the program supplied to the center computer, modified by means of this algorithm, permits the first resolver mounted on the motor shaft to control the operation of the electric robot in the conventional manner.

## Claims

1. System for programming by direct or manual learning an electric robot having each of its axes (A,B,C,D,E,F) controlled by an electric motor (MA,MB,MC,MD,ME,MF), a reduction gear (R) connected to each electric motor (MA-MF) and to each robot axis (A-F), a clutch (G) for disconnecting the electric motor (MA-MF) during the programming operation by direct or manual learning and connecting again the electric motor (MA-MF) during the normal operation of the robot, a first resolver (T) on each shaft of the electric motors (MA-MF) and a control means for engaging and disengaging each clutch (G), characterized in that said clutch (G) is arranged between the robot axis (A-F) and the reduction gear (R), for disconnecting the latter together with the electric motor (MA-MF) from the respective robot axis (A-F) and in that there is provided a second resolver (T1) mounted on each robot axis (A-F) and undertaking the function of the first resolver (T) mounted on the shaft of each electric motor (MA-MF) when the electric motor is disconnected from the robot axis and the programming operation by direct learning is being made.

2. System according to claim 1, characterized in that said clutch (G) is mounted at least on the main robot axes (A,B,C), i.e. the axes controlling robot portions of considerable mass.

3. System according to claim 1, characterized in that said control means for engaging and disengaging each clutch (G) is of pneumatic type.

4. System according to any one of the preceding claims, characterized in that, in order to have the same precision as the first resolver (T) mounted on each motor shaft and to take into account the reduction gear, during the learning step the measurements given by the second resolver (T1) are modified by the following algorithm:
$$Q = 16384 \times pm / (16384/r)$$

where Q      is the measure of the learning robot
16384      is the point number on 360° supplied by the resolver and is the maximum obtainable resolution;
pm      is the position of the robot axis read by the second resolver (T1);
r      is the reduction ratio of the second resolver (T1) to the first resolver (T)

and supplied in the so modified form to the center computer controlling the system.

## Patentansprüche

1. Vorrichtung zur Programmierung eines elektrischen Roboters durch direktes oder manuelles Lernen, bei welchem Roboter jede seiner Achsen (A,B,C,D,E,F) von einem Elektromotor (MA,MB,MC,MD,ME,MF) gesteuert wird, mit einem Untersetzungsgetriebe (R), das mit jedem Elektromotor (MA-MF) und mit jeder Roboterachse (A-F) verbunden ist, einer Kupplung (G) zum Ausschalten des Elektromotors (MA-MF) während des Programmierens durch direktes oder manuelles Lernen und zum erneuten Einschalten des Elektromotors (MA-MF) während der normalen Roboterarbeit, einem ersten Resolver (T) auf jeder Welle der Elektromotoren (MA-MF) und einem Steuermittel zum Ein- und Ausrücken jeder Kupplung (G), dadurch gekennzeichnet, daß die Kupplung (G) zwischen den Roboterachse (A-F) und dem Untersetzungsgetriebe (R) angeordnet ist, um letzteres zusammen mit dem Elektromotor (MA-MF) von der entsprechenden Roboterachse (A-F) zu trennen, und daß ein zweiter Resolver (T1) vorgesehen ist, der auf jede Roboterachse (A-F) montiert ist und die Funktion des auf die Welle von jedem Elektromotor (MA-MF) montierten ersten Resolvers (T) ausführt, wenn der Elektromotor von der Roboterachse getrennt ist und die Programmierung durch direktes Lernen erfolgt.

2. Vorrichtung gemäß Patentanspruch 1, dadurch gekennzeichnet, daß die Kupplung (G) zumindest auf die Roboterhauptachsen (A,B,C), d.h. die Achsen, die Roboterteile von einer beträchtlichen Masse steuern, montiert ist.

3. Vorrichtung gemäß Patentanspruch 1, dadurch gekennzeichnet, daß das Steuermittel zum Ein- und Ausrücken der Kupplung (G) pneumatischer Art ist.

4. Vorrichtung gemäß einem der vorhergehenden Patentansprüche, dadurch gekennzeichnet, daß, um die gleiche Präzision wie bei dem auf jede Motorwelle montierten ersten Resolver (T) zu haben und dem Untersetzungsgetriebe Rechnung zu tragen, während des Lehrvorgangs die durch den zweiten Resolver (T1) erteilten Maße durch den folgenden Algorithmus geändert werden:
$$Q = 16384 \times pm / (16384/r)$$

worin Q      das Maß des lehrenden Roboters darstellt;
16384      die Punktzahl über 360°, die der Resolver liefert, und die maximale erzielbare Bestimmung ist;

pm      für die Position der vom zweiten Resolver (T1) abgelesenen Roboterachse steht;

r      das Reduzierverhältnis des zweiten Resolvers (T1) zum ersten Resolver (T) ist,

und in der so geänderten Form dem die Vorrichtung steuernden Zentralcomputer eingespeist werden.

## Revendications

1. Système pour programmer un robot électrique par apprentissage direct ou manuel, robot dans lequel chaque axe (A,B,C,D,E,F) controlé par un électromoteur (MA,MB,MC,MD,-ME,MF), avec un engranage réducteur (R) relié à chaque électromoteur (MA-MF) et à chaque axe (A-F) du robot, un embrayage (G) pour désengager l'électromoteur (MA-MF) pendant l'opération de programmation par apprentissage direct ou manuel et pour engager de nouveau l'électromoteur (MA-MF) pendant l'opération normale du robot, un premier résolveur (T) sur chaque arbre des électromoteurs (MA-MF) et un moyen de contrôle pour engager et désengager chaque embrayage (G), caractérisé en ce que ledit embrayage (G) est arrangé entre les axes (A-F) du robot et l'engranage réducteur (R) pour pouvoir obtenir le désengagement dudit engranage réducteur et dudit électromoteur (MA-MF) des axes respectifs (A-F) du robot, et en ce qu'il y a un second résolveur (T1) monté sur chaque axe (A-F) du robot et assumant la fonction du premier résolveur (T) monté sur l'arbre de chaque électromoteur (MA-MF) pendant l'opération de programmation par apprentissage direct, lorsque l'électromoteur est désangagé des axes du robot.

2. Système selon la revendication 1, caractérisé en ce que ledit embrayage (G) est monté au moins sur l'axe principal (A,B,C) du robot, c'est-à-dire l'axe qui commande les éléments de robot de considérable masse.

3. Système selon la revendication 1, caractérisé en ce que ledit moyen de contrôle pour embrayer et débrayer chaque embrayage (G) est de type pnéumatique.

4. Système selon quelconque des revendications précédantes, caractérisé en ce que, pour obtenir la même précision du premier résolveur (T) monté sur chaque arbre du moteur et en tenant compte de l'engranage réducteur, pendant l'opération d'apprentissage les mesures données par le second resolveur (T1) sont modifiées selon le suivant algorithme:

$$Q = 16384 \times pm / (16384/r)$$

où Q      est la mesure du robot apprendant

16384      est le nombre de points sur 360° donné par le résolveur et représente la résolution maximum que l'on peut obtenir;

pm      est la position des axes du robot lue par le second resolveur (T1);

r      est le rapport de réduction entre le second résolveur (T1) et le premier résolveur (T)

lesdites mesures étant alimentées dans la forme ainsi modifiée à l'ordinateur central contrôlant le système.

FIG. 1

FIG. 2

MD ME MF

E

D

F

4

5

C

3

B

MC

A

2

MA

1

MD

4

C

3

T

T

MB

MC

A

2

1

EP 0 520 128 B1

EP 0 520 128 B1

# FIG. 3

FIG. 4

FIG. 5

FIG. 6

FIG. 7